Europäisches Patentamt

European Patent Office

Office européen des brevets

(11) Veröffentlichungsnummer: **0 473 126 A1**

(12) **EUROPÄISCHE PATENTANMELDUNG**

(21) Anmeldenummer: **91114421.0**

(51) Int. Cl.⁵: **A23K 3/03**

(22) Anmeldetag: **28.08.91**

(30) Priorität: **29.08.90 DE 4027258**
**01.11.90 DE 4034749**

(43) Veröffentlichungstag der Anmeldung:
**04.03.92 Patentblatt 92/10**

(84) Benannte Vertragsstaaten:
**AT BE CH DE FR GB IT LI NL SE**

(71) Anmelder: **SANOFI-CEVA Gesellschaft mit beschränkter Haftung**
**Kanzlerstrasse 6**
**W-4000 Düsseldorf(DE)**

(72) Erfinder: **Weissbach, Friedrich, Prof. Dr agr. sc.**
**Parkstrasse 7**
**W-2530 Warnemünde(DE)**
Erfinder: **Reuter, Burkhard, Dr. Agr.**
**Ahlbecker Strasse 8/0201**
**W-2520 Rostock 22(DE)**

Erfinder: **Zwierz, Peter-Michael, Dr. rer. nat.**
**Leninallee 86**
**W-2500 Rostock(DE)**
Erfinder: **Kwella, Manfred, Dr. rer. nat.**
**Kölner Strasse 10**
**W-2500 Rostock(DE)**
Erfinder: **Schmidt, Ludwig, Dr. rer. sc.**
**M.-Gorki-Strasse 34**
**W-2500 Rostock 21(DE)**
Erfinder: **Kalzendorf, Christine, Dr. agr. ing.**
**Dr. Lorenz-Weg 1**
**W-2500 Rostock(DE)**
Erfinder: **Kochannek, Bernd, Dipl. Ing. Agr.**
**Lortzingweg 4**
**W-5309 Meckenheim(DE)**

(74) Vertreter: **Türk, Gille, Hrabal**
**Brucknerstrasse 20**
**W-4000 Düsseldorf 13(DE)**

(54) **Kombinationspräparat und Verfahren zum Einsäuern von Grüfutter und Verhindern von aeroben Abbau-Vorgängen in Gärfutter.**

(57) Die Erfindung betrifft ein Kombinationspräparat als Silierhilfe zum Einsäuern von Grünfutter und Verhindern von aeroben Abbauvorgängen im Gärfutter, enthaltend Milchsäure erzeugende Bakterien, Alkalisalze aliphatischer Fettsäuren und gegebenenfalls übliche Trägerstoffe und/oder Hilfsstoffe, sowie ein Verfahren zu dessen Herstellung. Die Erfindung betrifft auch ein Verfahren zur Verhinderung von aeroben Abbauvorgängen im Gärfutter durch Zusatz eines Gemisches enthaltend Milchsäure erzeugende Bakterien und Alkalisalze aliphatischer Fettsäuren mit insgesamt bis 8 C-Atomen und gegebenenfalls übliche Trägerstoffe und/oder Hilfsstoffe, wobei dem Futter bei der Einlagerung Milchsäure erzeugende Bakterien in einer wässrigen Lösung von Alkalisalzen aliphatischer Fettsäuren mit insgesamt bis 8 C-Atomen zugesetzt werden.

EP 0 473 126 A1

Die Erfindung betrifft ein Kombinationspräparat zum Einsäuern von Grünfutter und Verhindern von aeroben Abbauvorgängen in Gärfutter, enthaltend Milchsäure erzeugende Bakterien, Alkalisalze niederer aliphatischer Fettsäuren und gegebenenfalls übliche Träger und/oder Hilfsstoffe. Die Erfindung betrifft auch die Verwendung dieser Präparate zum Einsäuern von Grünfutter und ein Verfahren zum Einsäuern von Grünfutter und Verhindern von aeroben Abbauvorgängen im Gärfutter.

Das Einsilieren von Grünfutter hat außerordentliche wirtschaftliche Bedeutung. Es sind verschiedene Verfahren bzw. Zusatzstoffe zur Beschleunigung der Vergärung von Grünfuttermassen bzw. zur Verbesserung der Silagen vorgeschlagen worden. Für diesen Zweck sind Alkali- und/oder Erdalkaliformiate, insbesondere Calciumformiat, im Gemisch mit anderen Zusatzstoffen verwendet worden. Die Kombination mit Hexamethylentetramin ist beschrieben in DE-A-2 602 626 = US-A-4,079,150 und die Kombination mit Benzoesäure und Sulfiten in DE-A-25 07 067 = US-A-4,073,889. Auch der Zusatz von Milchsäure erzeugenden Bakterien ist bekannt, da die Milchsäuregärung ein wesentlicher Vorgang beim Einsilieren von Grünfutter ist.

Eine gute Silage sollte am Ende der Gärung etwa 2 bis 3 Gew.-% Milchsäure enthalten. Die zugesetzten Bakterien sollten alle oder möglichst viele der im Grünfutter enthaltenen Zucker vergären können. Die Verwendung von Bakterien, die man den Silagen zusetzt, wird offenbart in OE-A-262 040.

Ein verbessertes Verfahren zum Einsäuern von Grünfutter ist in der DE-A-36 16 181 = EP-A-0 250 786 offenbart, wo Bakterienpräparate bzw. Bakterien beschrieben sind, die verbesserte Silagen liefern, insbesondere in schnellerer Zeit eine stärkere Säuerung der Silage bewirken, wobei eine Buttersäuregärung weitgehend vermieden wird. Bei diesen Bakterien handelt es sich um Lactobacillus plantarum DSM 3676 und/oder Lactobacillus plantarum DSM 3677. Der Einsatz von Impfkulturen, die unter den Bedingungen im Silobehälter bei Gärfutter eine rasche und verstärkte Milchsäure-Bildung bewirken, ist jedoch vielfach bei schwer silierbaren Futterarten (Leguminosen, Feuchtfutter) mit größerem Risiko behaftet.

Für einen sehr guten Erfolg der Milchsäure erzeugende Bakterien ist eine völlige homogene Verteilung der Bakterien im Grünfutter vorteilhaft, z.B. durch Suspendieren der Bakterien in einer ausreichenden Flüssigkeitsmenge und durch Zugabe dieser Suspension zum Grünfutter. Außerdem hat sich gezeigt, daß der Zusatz von Milchsäure erzeugende Bakterien bei zuckerarmen Grünfutter wegen des dort oft vorliegenden Mangels an Gärsubstrat die Fehlgärungen nicht immer zuverlässig unterbinden kann. Man hat deshalb vorgeschlagen, die Zugabe von Milchsäure erzeugende Bakterien mit der von Zucker (z.B. beschrieben in der OE-A-270 064) oder mit der von Kohlenhydratpolymeren spaltenden Enzymen (z.B. beschrieben in SE-A-800 1062) zu kombinieren. Diese Vorschläge haben allerdings nicht zu den erwarteten Ergebnissen geführt. Im Falle des gleichzeitigen Zusatzes von Zucker oder zuckerhaltigen Stoffen sind relativ große Mengen erforderlich, wodurch das Verfahren sehr umständlich und unwirtschaftlich wird. Im Falle des gleichzeitigen Zusatzes von Enzymen hat sich ergeben, daß diese den Zucker nicht rasch genug freisetzen.

In der DE-A-3916563 wird ein Kombinationspräparat enthaltend Alkali-/ oder Erdalkaliformiate und Milchesäure erzeugende Bakterien beschrieben. Als Alkali- und Erdalkaliformiate wird gemäß den Beispielen nur Calciumformiat verwendet. Bei der praktischen Anwendung dieses Präparates wird nicht erwähnt, daß es sich hierbei um eine Lösung handeln könnte. Vielmehr wird als vorteilhafte Form der Anwendung eine streufähige Mischung erwähnt. Diese hat jedoch den Nachteil, daß bei Zugabe eine Pulvers zum Siliergut nur schwer eine homogene Verteilung erreicht wird. Außerdem müssen beide Medien, Milchsäurebakterien und Calciumformiat, in der Regel getrennt voneinander parallel appliziert werden.

Daneben häuften sich in den letzten Jahren die Beobachtungen, daß im Gärfutter guter Qualität unerwünschte Nachgärvorgänge einsetzten. Besonders Anwelksilagen und kohlenhydratreiche Silagen wie Mais- und Zuckerrübenblattsilagen erwärmen sich mehr oder weniger schnell, entweder schon im Gärfutterbehälter selbst an den der Luft zugänglichen Stellen oder unmittelbar nach der Auslagerung. Damit verbunden ist ein rascher Substanzabbau, die Abnahme der während der anaeroben Gärphase gebildeten organischen Säuren und eine im Gefolge des pH-Anstieges einsetzende Eiweißzersetzung. Derartiges Gärfutter bewirkt schon bei nur schwach einsetzenden Nachgärvorgängen Verdauungsschwierigkeiten, und die Futteraufnahme wird bei fortgeschrittener Erwärmung auf 40 °C und darüber zumeist von den Tieren verweigert. Als Verursacher solcher nachträglich aerober Abbauvorgänge in gut gelungenen Silagen wurden 1964 von Beck und Groß (Das wirtschaftseigene Futter, 10, 4) erstmals eine Reihe spezieller Hefen mit der Fähigkeit zur Laktatassimilation erkannt. In Silagen nur mäßiger oder schlechter Qualität treten keine Nachgärerscheinungen auf, da bereits geringe Mengen Buttersäure die Entwicklung von Hefen verhindern.

Derzeit sind von allen herkömmlichen Silierhilfsmitteln, die Fehlgärungen verhindern, nur zwei Möglichkeiten bekannt, die auch eine Verhinderung der aeroben Abbauvorgänge bewirken können:

a) Zusatz von Propionsäure in einer Konzentration, die eine Hefeentwicklung verhindert, z.B. Luprosil® (fungistatische Wirkung), und

b) Zusatz von Konservierungsmitteln mit fungizider Wirkung, z.B. Nitrit und Hexamethylentretramin (Kofasil plus®).

Zum weiteren wird in der bereits oben genannten DE-A-25 07 067 = US-A-4,073,889 eine Kombination der Konservierungsstoffe Na-Benzoat bzw. Benzoesäure, Salze der Ameisensäure (Formiate) und Salze der schwefligen Säure in einem variablen Wirkstoffverhältnis beschrieben, die zur Verhinderung von aeroben Abbauvorgängen im Gärfutter verwendet wird. Obwohl hiermit gute Ergebnisse erzielt werden können, ist die Verwendung dieser Konservierungsstoffe bei schwer silierbaren Futterarten wie Leguminosen und Feuchtfutter nicht besonders vorteilhaft.

Die Aufgabe der Erfindung besteht darin, ein Kombinationspräparat als Silierhilfe bereitzustellen, das zum einen durch rasche Milchsäurebildung in der Silage die Entwicklung von Buttersäure bildenden Bakterien (Clostridien) in der Silage verhindert, zum anderen aerobe Abbauvorgänge nach Abschluß der Gärphase verhindert. Dabei sind an ein solches Mittel, das auch unter Praxisbedingungen risikofrei eine Verhinderung der aeroben Abbauvorgänge in Silagen gewährleistet, folgende Forderungen zu stellen:

1. Entwicklungshemmung aller Lactat assimilierenden Silagehefen unter aeroben Bedingungen;
2. keine ins Gewicht fallende Wachstumshemmung von Milchsäurebakterien unter anaeroben Bedingungen;
3. kein ins Gewicht fallender Abbau oder Inaktivierung der zugesetzten Wirkstoffe während der anaeroben Gärphase;
4. ernährungsphysiologische Unbedenklichkeit bei der Verfütterung solcher diese Zusatzstoffe enthaltenden Silagen;
5. homogene Verteilung des Präparats im Grünfutter mit geringem technischen Aufwand;
6. geringe Kosten, die einen wirtschaftlichen Einsatz ermöglichen.

Die Erfinder haben nun überraschend gefunden, daß die zuvor genannten Anforderungen weitgehend von einer Kombination von Milchsäure erzeugende Bakterienkulturen suspendiert in einer wässrigen Lösung von Alkalisalzen aliphatischer Fettsäuren erfüllt werden.

Die Lösung der Aufgabe der Erfindung erfolgt demnach durch Bereitstellung eines Kombinationspräparates als Silierhilfe zum Einsäuern von Grünfutter und Verhindern von aeroben Abbauvorgängen im Gärfutter, enthaltend Milchsäure erzeugende Bakterien, Alkalisalze aliphatischer Fettsäuren, und gegebenenfalls übliche Trägerstoffe und/oder Hilfsstoffe, dadurch gekennzeichnet, daß es Milchsäure erzeugende Bakterien in einer wässrigen Lösung von Alkalisalzen aliphatischer Fettsäuren mit insgesamt 1 bis 8 C-Atomen enthält. Das Kombinationspräparat gemäß der Erfindung enthält in einer Ausführungsform Milchsäure erzeugende Bakterien in einer wäßrigen Lösung von Alkalisalzen niederer aliphatischer Fettsäuren mit insgesamt 1 bis 3 C-Atomen. In einer anderen Ausführungsform enthält das Kombinationspräparat gemäß der Erfindung Milchsäure erzeugende Bakterien in einer wäßrigen Lösung von Alikalisalzen aliphatischer Fettsäuren mit insgesamt 4 bis 8 C-Atomen gegebenenfalls im Gemisch mit Alkalisalzen aliphatischer Fettsäuren mit insgesamt 1 bis 3 C-Atomen.

Gegenstand der Erfindung ist auch ein Verfahren zur Verhinderung von aeroben Abbauvorgängen im Gärfutter durch Zusatz eines Gemisches enthaltend Milchsäure erzeugende Bakterien, Alkalisalze aliphatischer Fettsäuren und gegebenenfalls übliche Trägestoffe und/oder Hilfsstoffe, dadurch gekennzeichnet, daß dem Futter bei der Einlagerung Milchsäure erzeugende Bakterien in einer wässrigen Lösung von Alkalisalzen aliphatischer Fettsäuren mit insgesamt 1 bis 8 C-Atomen zugesetzt werden. In einer Ausführungsform des erfindungsgemäßen Verfahrens zur Verhinderung von aeroben Abbauvorgängen werden dem Futter bei der Einlagerung Milchsäure erzeugende Bakterien in einer wäßrigen Lösung von Alkalisalzen niederer aliphatischer Fettsäuren mit insgesamt 1 bis 3 C-Atomen zugesetzt. In einer anderen Ausführungsform des erfindungsgemäßen Verfahrens zur Verhinderung von aeroben Abbauvorgängen werden dem Futter bei der Einlagerung Milchsäure erzeugende Bakterien in einer wäßrigen Lösung von Alkalisalzen aliphatischer Fettsäuren mit insgesamt 4 bis 8 C-Atomen gegebenenfalls im Gemisch mit Alkalisalzen aliphatischer Fettsäuren mit insgesamt 1 bis 3 C-Atomen zugesetzt.

Gegenstand der Erfindung ist auch die Verwendung des erfindungsgemäßen Kombinationspräparats als Silierhilfe zum Einsäuern von Grünfutter und zur Verhinderung von aeroben Abbauvorgängen.

Bevorzugt sind solche Gemische, die mehr als 50 % Äquivalentanteile Fettsäuren mit insgesamt 1 bis 8 C-Atomen enthalten.

Dabei bedeuten Milchsäure erzeugende Bakterien solche Stämme, die unter den im Silo herrschenden Bedingungen gedeihen und ausreichend Milchsäure produzieren, d.h., die so viel Milchsäure bilden, daß die dadurch verursachte pH-Absenkung keine weitere Entwicklung von Mikroorganismen zuläßt. Geeignete Bakterien sind solche der Gattung Lactobacillus, Streptococcus, und Pediococcus. Besonders geeignet sind Arten wie Lactobacillus casei und Lactobacillus plantarum, Subspecies arabinosus sowie Streptococcus faecium. Die in der DE-A-36 16 181 beschriebenen Mikroorganismen Lactobacillus plantarum DSM 3676 und DSM 3677 ergeben besonders gute Ergebnisse, denn sie zeichnen sich durch die besondere Fähigkeit in der Intensität und Geschwindigkeit der Fermentierung von Zuckern, wie sie in Grünfutter vorliegen, bei den üblichen Silagetemperaturen aus. In Bezug auf die Identifizierung und Aufbewahrungsbedingungen der zuvor genannten Mikroorganismen wird auf die DE-A-36 16 181 verwiesen. Während der Züchtung kann gegebenenfalls eine alkalisch wirkende Substanz dem Nährmedium zugesetzt werden, um den pH-Wert nicht zu stark absinken zu lassen. Beispiele für solche alkalische Substanzen sind Kaliumhydroxidlösung, Natriumhydroxidlösung, Sodalösung. Das Abtrennen der Zellen kann in bekannter Weise erfolgen. Beispielsweise können die Zellen in einer Zentrifuge abgetrennt werden. Man kann ihnen anschließend einen Schutzstoff, beispielsweise ein Schutzkolloid, z.B. Milchpulver, zusetzen. Es können auch andere Schutzstoffe, beispielsweise Lactose oder Ascorbinsäure verwendet werden. Die Zellen können dann getrocknet bzw. lyophilisiert werden. Man erhält ein stabiles Präparat, das die aktiven Bakterien enthält und lange Zeit ohne Verlust ihrer Aktivität haltbar ist.

Als Milchsäure erzeugende Bakterien kann auch ein Gemisch von Lactobacillus plantarum DSM 3676 und Lactobacillus plantarum DSM 3677, wobei bezogen auf die Anzahl der Keime, 10 bis 90 % Lactobacillus plantarum DSM 3676 und 90 bis 10 % Lactobacillus plantarum DSM 3677 vorliegen, eingesetzt werden.

Die Bakterien werden zweckmäßig in einer Menge von $10^3$ bis $10^8$ Keimen auf 1g Trockensubstanz zugesetzt, bevorzugt ist die untere Grenze der Menge an zugesetzten Keimen $10^4$, die obere Grenze der Menge an zugesetzten Keimen ist bevorzugt $10^7$ bezogen auf 1g Trockensubstanz.

Neben dem zuvor beschriebenen Gehalt an Milchsäure erzeugenden Bakterien weist das erfindungsgemäße Kombinationspräparat einen Gehalt an Alkalisalzen niederer aliphatischer Fettsäuren mit insgesamt bis 8 C-Atomen auf. Es wurde überraschenderweise gefunden, daß Milchsäure erzeugende Bakterien in konzentrierten wässrigen Lösungen von Alkalisalzen niederer aliphatischer Fettsäuren mit insgesamt bis 8 C-Atomen für eine gewisse Zeit ihre Lebensfähigkeit behalten. Diese Erkenntnis ist völlig überraschend, da Milchsäure erzeugende Bakterien in konzentrierten Lösungen anderer neutraler chemischer Wirkstoffe, die bekannt sind als Wirkstoffe zur Haltbarmachung von Silage, wie Natriumbenzoat oder Hexamethylentetramin, sofort ihre Lebensfähigkeit verlieren. Auch in den reinen niederen aliphatischen Fettsäuren wie Ameisen-, Essig- oder Propionsäure oder auch in Formalin sind die Milchsäure erzeugende Bakterien nicht lebensfähig. Da Suspensionen von Milchsäure erzeugender Bakterien selbst in reinem Wasser bereits nach wenigen Tagen einen empfindlichen Keimzahlverlust erleiden, wird empfohlen, sie nicht länger als 48 h aufzubewahren. Überraschenderweise wurde nun gefunden, daß Milchsäure erzeugende Bakterien in Lösungen von Alkalisalzen niederer aliphatischer Fettsäuren mit insgesamt bis 8 C-Atomen bei Zimmertemperatur ihre Lebensfähigkeit wenigstens über mehrere Tage, z.T. sogar bis zu 8 Wochen behalten. Ihre Wirksamkeit kann außerdem durch einen gewissen Gehalt an Zucker als geringe Startzuckerzuzuge für die Milchsäure erzeugende Bakterien weiter verbessert werden. Verwendbar sind Lösungen einzelner Alkalisalze aliphatischer Fettsäuren mit insgesamt 1 bis 8 C-Atomen wie auch Lösungen von Gemischen mehrerer solcher Salze in variablen Mengenverhältnissen. Bevorzugt verwendete Fettsäuren sind Ameisensäure ($C_1$), Essigsäure ($C_2$), Propionsäure ($C_3$) und n-Caprylsäure ($C_8$). Bevorzugte Alkalimetalle sind Natrium und Kalium. Besonders bevorzugt ist die Verwendung von Natriumformiat. Unter Alkalisalzen werden im Sinne der Erfindung auch Ammoniumsalze verstanden. Der Zusatz der Alkalisalze aliphatischer Fettsäuren mit insgesamt 1 bis 8 C-Atomen wird so bemessen, daß, bezogen auf das Gewicht der Trockensubstanz, 0.01 bis 4.0 Gew.-% berechnet als Natriumsalze zugesetzt werden. Die untere Grenze beträgt bevorzugt 0.2 Gew.-%, bevorzugter 0.3 Gew.-%, besonders bevorzugt 0.5 Gew.-%. Die obere Grenze beträgt bevorzugter 2.5 Gew.-%, besonders bevorzugt 1.5 Gew.-%. In einer Ausführungsform der Erfindung wird der Zusatz der Alkalisalze niederer aliphatischer Fettsäuren mit insgesamt 1 bis 3 C-Atomen so bemessen, daß bezogen auf das Gewicht der Trockensubstanz 0.01 bis 1.2 Gew.-% berechnet als Natriumformiat zugesetzt werden. Die untere Grenze beträgt hier bevorzugt 0.01 Gew.-%, bevorzugter 0.02 Gew.-%, besonders bevorzugt 0.06 Gew.-%. Die obere Grenze beträgt bevorzugt 7 Gew.-%, besonders bevorzugt 0.5 Gew.-%.

Die Konzentration der wässrigen Lösungen von Alkalisalzen niederer aliphatischer Fettsäuren mit insgesamt 1 bis 8 C-Atomen kann in weiten Grenzen schwanken, z.B. von etwa 1 Gew.-%, vorzugsweise etwa 3 Gew.-% bis zur Sättigung. In der Praxis wird man zu große Wassermengen vermeiden wollen und bevorzugt eine konzentrierte, besonders bevorzugt eine gesättigte Alkalisalzlösung verwenden.

Das Kombinationspräparat wird erfindungsgemäß als Suspension der Milchsäure erzeugende Bakterien in einer wässrigen Lösung der Alkalisalze aliphatischer Fettsäuren mit insgesamt bis 8 C-Atomen dem zu silierenden Gut zugesetzt. Die Suspension kann direkt vor der Zugabe zu dem zu silierenden Gut durch Vermischen der Milchsäure erzeugenden Bakterien mit einer wässrigen Lösung des Alkalisalzes aliphatischer Fettsäuren mit insgesamt bis 8 C-Atomen hergestellt werden. Es ist aber auch möglich, dem Anwender das fertige Präparat direkt zu übergeben, wenn die Zeit zwischen Herstellung und Anwendung nur kurz ist, d.h. je nach Stamm der Milchsäure erzeugenden Bakterien 1 bis 4 Wochen. Im Falle einer längeren Lagerung und zur Minimierung des Lagerungsrisikos ist es von Vorteil, die Komponenten, d.h. die wässrige Lösung des Alkalisalzes der aliphatischen Fettsäure und die z.B. lyophilisierte Bakterienkultur getrennt an den Anwender zu übergeben. Es ist besonders vorteilhaft, wenn die Komponenten in aufeinander abgestimmten Packungsgrößen dem Anwender übergeben werden. Das Vermischen der Komponenten kann dann durch den Anwender unmittelbar oder kurz vor dem Gebrauch erfolgen.

Das erfindungsgemäße Kombinationspräparat kann dem Grünfutter z.B. während des Häckselns und/oder bei der Einlagerung zugesetzt werden. Das Zusetzen des Kombinationspräparates in Form einer Dispersion hat den außerordentlichen Vorteil, daß eine homogene Verteilung der Komponenten erreicht wird, was zu einer hervorragenden Wirksamkeit führt.

Grünfutter, das mit dem Kombinationspräparat gemäß der Erfindung eingesäuert werden kann, ist z.B. Weide- oder Mähweidegras, Luzerne und andere Leguminosen, Kleegrasmischungen unterschiedlichster Trockensubstanzgehalte, Getreideganzpflanzen, Zuckerrübenblatt, Zuckerrübenpreßschnitzel sowie Mais. Besonders vorteilhafte Ergebnisse werden erzielt beim Einsilieren von leicht angewelkten oder angewelktem und nachträglich verregnetem Grünfutter.

Träger und/oder Hilfsstoffe, die das Kombinationspräparat gemäß der Erfindung neben den genannten Wirkstoffen enthalten kann, sind z.B. Kochsalz, andere Mineralsalze, Melasse, Zucker, Grünmehl, Trockenschnitzel, Stärke- oder Holzhydrolysate sowie Kohlehydrate spaltende Enzyme, wie beispielsweise Cellulasepräparate.

Die Erfindung wird an den nachfolgenden Beispielen erläutert:

BEISPIEL 1

In 6 Litern einer wäßrigen Lösung, die 37 Gew.-% Natriumformiat ($C_1$) und 3 Gew.-% Natriumcaprylat ($C_8$) enthält, werden 10 g eines Konzentrats von lyophilisierten Milchsäurebakterien (Lactobacillus plantarum, etwa $10^{10}$ Keime je g Konzentrat) suspendiert und das Gemisch anschließend in homogener Verteilung zu einer Tonne schwach gewelktem Gras zugesetzt. Anschließend wird das Gras wie üblich siliert. Durch diese Behandlung werden Fehlgärungen vermieden und eine Silage guter Qualität erzeugt.

BEISPIEL 2

In 4 Litern einer wäßrigen Lösung, die 40 Gew.-% Natriumacetat ($C_2$) und 4 Gew.-% Natriumcaprylat ($C_8$) enthält, werden 10 g eines Konzentrats von getrockneten Milchsäurebakterien (Streptococcus faecium, etwa $10^{10}$ Keime je g Konzentrat) suspendiert und das Gemisch zu einer Tonne trockensubstanzreichem Silomais in homogener Verteilung zugesetzt. Durch diese Behandlung wird erreicht, daß bei der anschließenden Silierung eine Silage von guter aerober Stabilität entsteht.

BEISPIEL 3

In konzentrierter Natriumformiat-Lösung (40 %, pH 7,8) wurden pro ml $10^8$ Keime lyophilisierter Milchsäure erzeugende Bakterienkulturen suspendiert. Diese Suspensionen werden bei Zimmertemperatur gelagert. Nach unterschiedlichen Lagerungszeiten wurde jeweils eine Probe von den Suspensionen entnommen und ihre Keimdichte im Kulturversuch für Lactobacillen nach dem Koch'schen Plattengußverfahren (MRS Medium) bzw. Streptococcen nach der Oberflächenmethode (Slanetz / Bartley-Agar) untersucht. Die Untersuchungen führten zu folgenden Ergebnissen:

| Aufbewahrungs-zeit Tage | Keime/ml | |
| --- | --- | --- |
| | Streptococcus faecium | Lactobacillus plantarum |
| 0 | $8,4 \times 10^7$ | $7,9 \times 10^8$ |
| 1 | $3,0 \times 10^7$ | $1,2 \times 10^8$ |
| 3 | $3,4 \times 10^7$ | $3,0 \times 10^8$ |
| 7 | $3,1 \times 10^7$ | $4,5 \times 10^7$ |
| 14 | $2,1 \times 10^7$ | $1,8 \times 10^7$ |
| 28 | $1,1 \times 10^7$ | nicht bestimmt |
| 56 | $1,4 \times 10^7$ | "        " |
| 133 | $2,0 \times 10^5$ | "        " |

## BEISPIEL 4

In einem Laborsilierversuch mit Luzerne (24,1 % Trockensubstanz) wurden die Ausgangsbedingungen durch einen Streßkeimzusatz erschwert (Enterobakterien, Clostridien-Sporen). Zur Verbesserung des Gärungsverlaufes wurden tags zuvor hergestellt Suspensionen von lyophilisiertem Streptococcus faecium in Wasser bzw. konzentrierter Natriumformiat-Lösung zugesetzt. Die Inokulationsdichte betrug in beiden Varianten $10^6$ Keime/g, der Natriumformiatzusatz 0,8 % der Trockensubstanz. Nach 6 Monaten Lagerungsdauer (25 °C) wurde folgendes Fermentationsmuster der Silagen festgestellt:

| Gärprodukte in % Frischmasse | Behandlungsvarianten | | |
| --- | --- | --- | --- |
| | Kontrolle (ohne Zusatz) | Sc.faecium | Sc.faecium Natriumformiat |
| pH-Wert | 5,46 | 5,98 | 4,56 |
| Milchsäure | 0,01 | 0,09 | 2,64 |
| Essigsäure[1] | 1,80 | 1,39 | 1,42 |
| Buttersäure[2] | 2,11 | 2,31 | 0,09 |
| Alkohole | 0,76 | 0,70 | 0,54 |
| Ammoniak | 0,276 | 0,316 | 0,105 |

[1]    Essigsäure + Propionsäure

[2]    i-Buttersäure  +  n-Buttersäure  +  i-Valeriansäure
    +  n-Valeriansäure  + n-Capronsäure

## BEISPIEL 5

In einem Laborsilierversuch mit Luzerne (24,1 % Trockensubstanz) wurden Zusätze von Milchsäure erzeugenden Bakterienkulturen allein und in Kombination mit Natriumformiat (NaFo) geprüft. Die lyophilisierten Milchsäure erzeugende Bakterien wurden in Wasser bzw. konzentrierter Natriumformiat-Lösung suspendiert und so appliziert. Die Inokulationsdichte betrug $10^6$ Keime/g, die NaFo-Dosis 0,8 % der Trockensubstanz. Folgende Ergebnisse wurden erzielt:

| | Behandlungsvarianten | | | | |
|---|---|---|---|---|---|
| | Kontrolle | Lb.plantarum | | Lb.casei | |
| | | NaFo | NaFo | ohne NaFo | mit NaFo |
| Keimgehalt nach 3 Tagen ($10^9$ CFU/g) | | | | | |
| | 0,86 | 1,3 | 1,4 | 1,2 | 1,5 |
| pH-Wert | | | | | |
| nach 3 Tagen | 5,05 | 4,88 | 4,78 | 5,05 | 4,68 |
| nach 7 Tagen | 4,96 | 4,73 | 4,69 | 4,87 | 4,58 |
| Garsäuremuster nach 112 Tagen (% Frischmasse) | | | | | |
| Milchsäure[1) | 0,43 | 1,40 | 2,00 | 0,03 | 2,02 |
| Essigsäure[1) | 1,40 | 1,14 | 0,96 | 0,96 | 1,03 |
| Buttersäure[2) | 0,76 | 0,34 | 0,07 | 2,07 | 0 |

1) 2)  siehe Anwendungsbeispiel 4

BEISPIEL 6

Sommergerste-Ganzpflanzen (44,7 % Trockensubstanzgehalt) wurden im Vegetationsstadium der Teigreife geschnitten und in Laborsilos unter Zusatz von Milchsäure erzeugende Bakterien und Natriumformiat allein sowie in Kombination beider Zusätze einsiliert. Die Anwendungsdosis und -technik entsprach der wie bei Beispiel 5. Nach 6 Monaten Lagerung wurden die Silagen untersucht. Durch die Inokulation wurde die Buttersäurebildung verhindert, gleichzeitig aber ein deutliches Risiko für die aerobe Stabilität der Silage bewirkt. Die Kombination beider Zusätze führte zu buttersäurefreien und aerob stabilen Silagen:

| NaFo | Bakterienkultur | Butter-säuregehalt der Silage in %g Frischmasse | Aerobe Stabilität | |
| --- | --- | --- | --- | --- |
| | | | $CO_2$/ 100gTS | Urteil |
| | Kontrolle | 0,59 | 0 | stabil |
| - | Sc.faecium | 0,29 | 0,04 | stabil |
| 0,3 | Sc.faecium | 0,08 | 0 | stabil |
| - | Lb.plantarum | 0,04 | 1,75 | instabil |
| 0,3 | Lb.plantarum | 0 | 0,11 | stabil |
| - | Lb.casei | 0,02 | 1,47 | instabil |
| 0,3 | Lb.casei | 0 | 0,05 | stabil |

**Patentansprüche**

1. Kombinationationspräparat als Silierhilfe zum Einsäuern von Grünfutter und Verhindern von aeroben Abbauvorgängen im Gärfutter, enthaltend Milchsäure erzeugende Bakterien, Alkalisalze aliphatischer Fettsäuren und gegebenenfalls übliche Trägerstoffe und/oder Hilfsstoffe, **dadurch gekennzeichnet,** daß es Milchsäure erzeugende Bakterien in einer wäßrigen Lösung von Alkalisalzen aliphatischer Fettsäuren mit insgesamt 1 bis 8 C-Atomen enthält.

2. Kombinationspräparat nach Anspruch 1, dadurch gekennzeichnet, daß es Milchsäure erzeugende Bakterien in einer wäßrigen Lösung von Alkalisalzen niederer aliphatischer Fettsäuren mit insgesamt 1 bis 3 C-Atomen enthält.

3. Kombinationspräparat nach Anspruch 1, dadurch gekennzeichnet, daß es Milchsäure erzeugende Bakterien in einer wäßrigen Lösung von Alkalisalzen aliphatischer Fettsäuren mit insgesamt 4 bis 8 C-Atomen gegebenenfalls im Gemisch mit Alkalisalzen aliphatischer Fettsäuren mit insgesamt 1 bis 3 C-Atomen enthält.

4. Kombinationspräparat nach einem oder mehreren der Ansprüche 1 bis 3, dadurch gekennzeichnet, daß die Milchsäure erzeugenden Bakterien solche der Gattungen Lactobacillus, Streptococcus oder Pediococcus sind.

5. Kombinationspräparat nach einem oder mehreren der Ansprüche 1 bis 4, dadurch gekennzeichnet, daß die Milchsäure erzeugenden Bakterien solche der Gattung Lactobacillus plantarum sind.

6. Kombinationspräparat nach einem oder mehreren der Ansprüche 1 bis 5, dadurch gekennzeichnet, daß die Milchsäure erzeugenden Bakterien Lactobacillus plantarum DSM 3676 und/oder Lactobacillus plantarum DSM 3677 sind.

7. Kombinationspräparat nach einem oder mehreren der Ansprüche 1 bis 6, dadurch gekennzeichnet, daß die Milchsäure erzeugenden Bakterien ein Gemisch von Lactobacillus plantarum DSM 3676 und Lactobacillus plantarum DSM 3677 ist, wobei bezogen auf die Anzahl der Keime, 10 bis 90 % Lactobacillus plantarum DSM 3676 und 90 bis 10 % Lactobacillus plantarum DSM 3677 vorliegen.

8. Kombinationspräparat nach einem oder mehreren der Ansprüche 1 bis 7, dadurch gekennzeichnet, daß die Alkalisalze der aliphatischen Fettsäuren Natrium- und/oder Kaliumsalze sind.

9. Verfahren zur Herstellung eines Kombinationspräparates nach einem oder mehreren der Ansprüche 1 bis 8, dadurch gekennzeichnet, daß die Milchsäure erzeugenden Bakterien in einer Lösung eines Alkalisalzes aliphatischer Fettsäuren suspendiert werden, gegebenenfalls mit üblichen Trägerstoffen und/oder Hilfsstoffen.

10. Verfahren zur Verhinderung von aeroben Abbauvorgängen im Gärfutter durch Zusatz eines Gemisches enthaltend Milchsäure erzeugende Bakterien und Alkalisalze aliphatischer Fettsäuren mit insgesamt 1 bis 8 C-Atomen und gegebenenfalls übliche Trägerstoffe und/oder Hilfsstoffe, dadurch gekennzeichnet, daß dem Futter bei der Einlagerung Milchsäure erzeugende Bakterien in einer wässrigen Lösung von Alkalisalzen aliphatischer Fettsäuren mit insgesamt 1 bis 8 C-Atomen zugesetzt werden.

11. Verfahren nach Anspruch 10, dadurch gekennzeichnet, daß dem Futter bei der Einlagerung Milchsäure erzeugende Bakterien in einer wäßrigen Lösung von Alkalisalzen niederer aliphatischer Fettsäuren mit insgesamt 1 bis 3 C-Atomen zugesetzt werden.

12. Verfahren nach Anspruch 10, dadurch gekennzeichnet, daß dem Futter bei der Einlagerung Milchsäure erzeugende Bakterien in einer wässrigen Lösung von Alkalisalzen aliphatischer Fettsäuren mit insgesamt 4 bis 8 C-Atomen gegebenenfalls im Gemisch mit Alkalisalzen aliphatischer Fettsäuren mit insgesamt 1 bis 3 C-Atomen zugesetzt werden.

13. Verfahren nach einem oder mehreren der Ansprüche 10 bis 12 , dadurch gekennzeichnet, daß als Milchsäure erzeugende Bakterien solche der Gattungen Lactobacillus, Streptococcus oder Pediococcus zugesetzt werden.

14. Verfahren nach einem oder mehreren der Ansprüche 10 bis 13, dadurch gekennzeichnet, daß als Milchsäure erzeugende Bakterien solche der Gattung Lactobacillus plantarum zugesetzt werden.

15. Verfahren nach einem oder mehreren der Ansprüche 10 bis 14, dadurch gekennzeichnet, daß als Milchsäure erzeugende Bakterien Lactobacillus plantarum DSM 3676 und/oder Lactobacillus plantarum DSM 3677 zugesetzt werden.

16. Verfahren nach einem oder mehreren der Ansprüche 10 bis 15, dadurch gekennzeichnet, daß als Milchsäure erzeugende Bakterien ein Gemisch von Lactobacillus plantarum DSM 3676 und Lactobazillus plantarum DSM 3677 zugesetzt wird, wobei bezogen auf die Anzahl der Keime, 10 bis 90 % Lactobacillus plantarum DSM 3676 und 90 bis 10 % Lactobacillus plantarum DSM 3677 vorliegen.

17. Verfahren nach einem oder mehreren der Ansprüche 10 bis 16, dadurch gekennzeichnet, daß als Alkalisalze aliphatischer Fettsäuren Natrium- und/oder Kaliumsalze zugesetzt werden.

18. Verfahren nach einem oder mehreren der Ansprüche 10 bis 17, dadurch gekennzeichnet, daß die Milchsäure erzeugenden Bakterien in einer Menge von $10^3$ bis $10^8$ Keimen auf 1 g Trockensubstanz des Siliergutes zugesetzt werden.

19. Verfahren nach einem oder mehreren der Ansprüche 10 bis 18, dadurch gekennzeichnet, daß dem Siliergut die Milchsäure erzeugenden Bakterien in einer Menge von $10^4$ bis $10^7$ Keimen auf 1 g Trockensubstanz des Siliergutes zugesetzt werden.

20. Verfahren nach einem oder mehreren der Ansprüche 10 bis 20 dadurch gekennzeichnet, daß die Alkalisalze aliphatischer Fettsäuren, bezogen auf das Gewicht der Trockensilage, in einer Menge von 0,01 bis 4,0 Gew.-%, bevorzugt 0,2 bis 4 Gew.-%, bevorzugter 0,3 bis 2,5 Gew.%, besonders bevorzugt 0,5 bis 1,5 Gew.-%, berechnet als Natriumsalz,

21. Verwendung des Kombinationspräparates nach einem oder mehreren der Ansprüche 1 bis 8 als Silierhilfe zum Einsäuern von Grünfutter und Verhindern von aeroben Abbauvorgängen.

**Europäisches Patentamt**

# EUROPÄISCHER RECHERCHENBERICHT

Nummer der Anmeldung

## EP 91 11 4421

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 369 198 (VALIO MEIJERIEN) <br> * Ansprüche 1,3-5,7-14; Beispiele 1-7 * * <br> — — — | 1-5,8-11, 13-21 | A 23 K 3/03 |
| X | GB-A-2 193 078 (PIONEER HI-BRED INTERNATIONAL) <br> * Seite 2, Zeile 5 - Zeile 39; Ansprüche 1,8,9,15 * * <br><br> — — — | 1,2,4, 8-11,13, 17,21 | |
| A | GB-A-2 095 534 (MARTTI EMIL LAMPILA) <br> * Ansprüche 1,3,4 * * <br> — — — — — | 1,2,10,11, 21 | |

**RECHERCHIERTE SACHGEBIETE (Int. Cl.5)**

A 23 K

Der vorliegende Recherchenbericht wurde für alle Patentansprüche erstellt

| Recherchenort | Abschlußdatum der Recherche | Prüfer |
|---|---|---|
| Den Haag | 06 November 91 | DEKEIREL M.J. |